# EUROPEAN PATENT APPLICATION

(11) **EP 2 098 971 A1**
(43) Date of publication of application: **09.09.2009**
(21) Application number: 08102262.6
(22) Date of filing: 04.03.2008
(51) Int. Cl.: G06F 21/00, H04N 7/16

(54) **Method for compensating a viewer of a broadcast programme for his presence during part of said broadcast programme**

(71) Applicant: Nagravision S.A., 1033 Cheseaux-sur-Lausanne (CH)
(72) Inventor: Le Pelerin, Alain, 1020 Renens (CH); Christinat, Stéphane, 1063 Boulens (CH)
(74) Representative: Leman Consulting S.A.

(57) **Abstract**

A method is described for allocating compensation or rewards to viewers of broadcast content, usually commercial content, for their active participation during the broadcast of said commercial content. The method uses a receiver/decoder module associated with a security module for receiving coded messages, displaying information soliciting the viewer's intervention, verifying the validity of the viewer's intervention and recording the amount of credit allocated to the viewer.

## Description

### INTRODUCTION

The present invention relates to the domain of TV broadcasting or more generally to digital audio/video broadcasting, particularly to the aspect of advertising, where an advertiser employs techniques to persuade a viewer to continue to view parts of a broadcast which he had not previously intended to view and/or, had the advertiser not employed the techniques in question, the viewer would normally have a tendency to ignore.

### BACKGROUND OF THE INVENTION

A significant part of the financing of TV programme distribution is covered by advertising revenue. The distribution of TV programmes nowadays is achieved through many different channels, for example by broadcasting via satellite, radio, cable or by internet. TV programmes may also be stored on various storage mediums such as hard disk, DVD or memory unit. Apparatus for viewing of TV programmes is also varied and can be a TV set, a personal computer (PC) or a mobile device such as a phone, a personal digital assistant (PDA) or a portable TV. Each of these mediums also gives the possibility for an advertiser to reach an audience.

Advertisers are willing to pay sizable amounts of money in buying the rights to include commercial content in a broadcast programme in order to influence viewers of the broadcast program to take some action as a result of having seen their message. However, viewers have a tendency to either skip the commercial content in the case where the programme is being viewed from a recording of a previous broadcast, or to change channel in order to avoid the commercial content or to simply stop viewing the broadcast by leaving the vicinity of the viewing apparatus during the airing of the commercial content. In order to circumvent this perceived problem and for advertisers to maximize payback on the costly process of producing and airing commercial messages, advertisers have looked for ways to hold the viewers' attention during the time that their messages are being played. This has been achieved by, for example carefully authoring the first or last number of seconds of a commercial break to provide a "teaser" to entice the viewer to watch multiple commercials during the commercial break. Other techniques, particularly in the case where a TV programme is being viewed from a medium on which it had previously been stored, involve ensuring the order of reproduction of the programme data with respect to the commercial material. For example, a part of a film will not be readable until a certain amount of commercial material has been played.

Another technique employed by advertisers to encourage consumers to read, watch or listen to their commercial messages is to offer a reward or some kind of compensation to a consumer in exchange for his having consumed the commercial content. Systems in common use today include the internet-based varieties, which are well documented in existing literature and by nature of the interactivity of the internet, are readily adapted to encouraging the consumer's active participation by soliciting some kind of reaction from the consumer. The reaction can be easily verified and compensation allotted accordingly. Similarly systems for rewarding consumers for their reaction during the time that a commercial message is being viewed are easily adapted for use during the playback of a recorded programme and are equally well documented in the literature. The present invention however focuses on the less well-known problems associated with the application of the reward system to the broadcast field.

Some of the techniques used by advertisers to ensure that the order of reproduction of programme data and commercial material is respected, or to monitor the viewer's reactions, have been borrowed from the Pay-TV industry. It is common practice in the industry for video content to be subject to conditional access enforcement by a security module. A stream of data is transmitted in an encrypted manner to a user terminal, which can be a TV or a receiver or any apparatus capable of receiving video data. By encrypting the data, the owner of said data can impose certain conditions regarding access to the data, the conditions usually dependant upon the payment of a fee. The encryption is done under control words or traffic encryption keys, which are changed at regular intervals (typically between two and thirty seconds, but may be much longer) in order to circumvent possible misuse by a third party who discovers the control word or encryption key.

In order for the receiver to be able to decrypt the data stream, encrypted under the control words, the latter are sent independently of the data stream within special control messages known as an ECM (entitlement control messages), which are themselves encrypted under a key known as a transmission key, which is unique to the transmission system between a control centre and a security module associated with the user terminal. The control word may be obtained by decrypting the entitlement control messages by means of the transmission key. Alternatively, the decryption of the ECM by the transmission key leads to an intermediate value which allows the determination of the control words, usually through a one-way function applied to the intermediate value.

The security operations are generally carried out in a security module associated with the user terminal. The security module can be represented in one of four different forms. The first of these consists in a microprocessor card, a smart card, or more generally an electronic module usually in the form of a key or a badge. This type of module is generally removable and connectable to the user terminal. The most common form comprises a set of electric contacts, but may also exist in contactless form, for example of type ISO 14443.

A second known form consists in an integrated circuit chip, generally placed in the user terminal in a permanent and non-removable manner. One such example is a circuit wired on a base or connector such as a SIM module connector.

In a third form, the security module is embedded within an integrated circuit chip that also has another function, for example in a descrambling module or in the microprocessor of the user terminal.

In a fourth embodiment, the security module is not realised through hardware, but rather its function is implemented through software. Given that in the four cases the function is identical although the security level differs, the term security module will be used regardless of the way in which its function is realized.

A part of the procedure during the decryption of an ECM is the verification for the presence in the security module of the access rights to the content in question. These rights can be managed by special authorization messages known as EMM (Entitlement Management Messages), which are capable of loading the rights directly into the security module.

To those acquainted with the field of advertising, there is a general awareness of techniques in use on the internet to reward users for their active attention to advertisements. The level of attention afforded to such advertisements can be tested by having the user interact in some way during the time that the advertising content is playing and subsequently checking his response. However, the same technique applied to the medium of TV broadcasting is less common. The object of the present invention is to address this problem using some of the techniques associated with conditional access systems mentioned above.

### SUMMARY OF THE INVENTION

The present invention relates to a method for compensating a viewer of a broadcast programme, using a system comprising at least a receiver/decoder, a security module, a display unit and a viewer input means, for his presence during at least part of said broadcast programme, wherein the validity of said presence is verified in the security module, said method comprising the following steps:
- receiving a first signal comprising a first component comprising at least the broadcast programme and a second component comprising video data to be used in soliciting a response on the part of the viewer;
- displaying the first component and the second component of the first signal on the display unit, thereby soliciting a response from the viewer via the viewer input means;
- receiving a second signal comprising verification data to be used in checking the validity of the viewer's response;
- transferring the second signal to the security module;
- using the security module to determine an expected response based on the received second signal;
- collecting the viewer's response;
- transferring the viewer's response to the security module;
- comparing the viewer's response with the expected response;
- storing a value indicating the result of the comparison between the viewer's response and the expected response.

### BRIEF DESCRIPTION OF THE DRAWINGS

The invention will best be understood by reference to the following detailed description of the preferred embodiment when read in conjunction with the accompanying drawings, wherein:
- FIG.1a, 1b, 1c and 1d show various methods for soliciting a viewer's intervention.
- FIG.2 shows one embodiment of the current invention.
- FIG.3 shows a further embodiment of the current invention.

### DETAILED DESCRIPTION

When a programme is broadcast to a plurality of viewers the programme often includes portions containing commercial content. These portions are usually inserted at regular intervals during the programme. To dissuade the viewer from leaving the vicinity of the viewing station or changing channel during the time that the commercial content is airing, the broadcast signal containing the commercial content is augmented by a second component, which is designed to be of interest to the viewer. This second component is displayed at the same time as the first component i.e. the commercial content, and is graphically embedded in the display of the first component. The second component is intended to test the viewer's level of attention during the airing of the commercial content.

The viewer is required to react to the display of the second component, usually via an alphanumeric keyboard or a remote control device or a joystick or some other viewer input means.

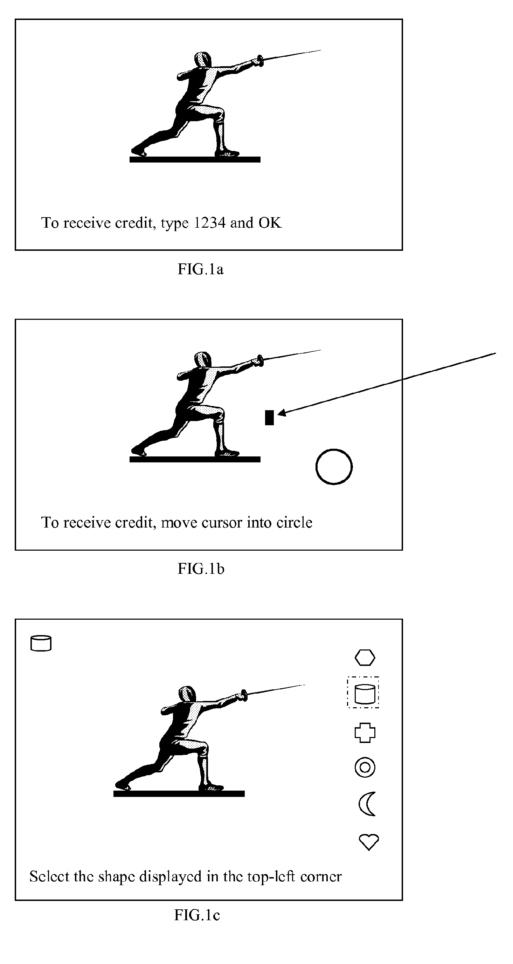

The second component may take one of several forms. For example, it could be a graphical representation of some text message and an alphanumeric string. The text message could request the viewer to enter the alphanumeric string that he sees on the screen. See FIG.1a.

By way of a second example, instead of an alphanumeric string, the second component could include a geometric form, where the position in which the geometric form appears on the screen will be the significant parameter. This parameter would be required to be given by the viewer as part of his response following the display of the second component. For example, the display of the second component could require the viewer to move a cursor into the geometric form. See FIG.1b.

We can imagine many different ways to prompt the viewer to a specific reaction such as displaying a symbol in a first area of the display unit and displaying in a second area a list of symbols, including a copy of the symbol in the first area, and prompting the viewer to move the cursor to the same symbol in the list which matches the symbol in the first area. See FIG.1c.

By way of a further example, the second component could lead to the display of an object which describes a particular on-screen trajectory over time, requiring the viewer to reproduce the observed trajectory by way of an appropriate viewer input means such as a keyboard or a joystick.

As well as the first signal with its two components as described above, a second signal is also transmitted. This second signal comprises information allowing the viewer's reaction to the display of the second component of the first signal to be verified. The second signal could take the form of an entitlement control message (ECM), commonly used in the Pay-TV industry. The ECM is an encrypted message containing all of the information necessary to verify the viewer's response e.g. an alphanumeric string, information describing the position on-screen in which certain characters or forms appear or vectors describing the trajectories traced on-screen by certain objects. For example, in the case where the viewer is asked to enter the alphanumeric string that he sees displayed (FIG.1a), the second signal contains the correct alphanumeric string. The viewer's input is sent to the security module where it is compared with the information contained in the second signal. By way of another example, in the case where the viewer is asked to move the cursor to a certain location (FIG.1b), the second signal contains information describing the correct location. The location information indicated by the viewer moving the cursor and pressing enter is sent to the security module where it is compared with the location information contained in the second signal.

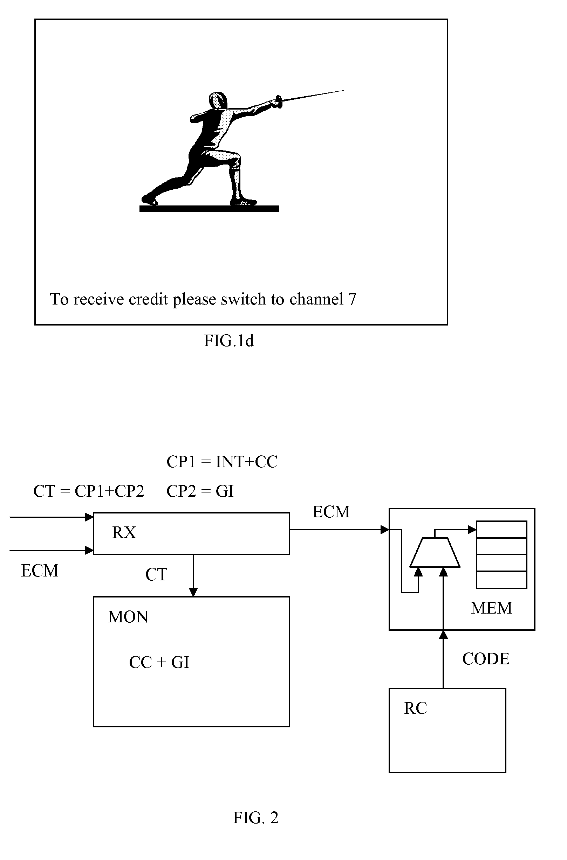

Another example of a way which could be used to prompt the viewer to take action is depicted in FIG.1d and illustrates a case wherein the second signal is divided into a plurality of parts. In such a case the viewer, while viewing on a first channel, is merely invited to change channel in order to receive credit. That is to say the second component of the first signal comprises information allowing the display of the appropriate instruction. The first channel thus invites the viewer to switch to a second channel broadcasting commercial content. This message would be broadcast only for a short time. At the same time, a control message which is the first part of the second signal is sent in the first channel and thus forwarded to the security module, allowing for the verification that the viewer was tuned to the first channel at the time the invitation was issued.

This invitation could be broadcast on several channels to invite the viewer to switch to the commercial content. In each of these channels containing the invitation, a control message ECM, being the first part of the second signal, is also broadcast.

On the commercial channel, the second part of the second signal is broadcast and in the case that the viewer has switched to this channel, this second part of the second signal is then transferred to the security module. Thus the security module, having the first part and the second part of the second signal, can verify that the viewer was present at the time the invitation was made and has effectively switched to the commercial channel. It is to be noted that the second part of the second signal could be broadcasted only when the commercial ends to be sure that the viewer stayed for the duration of the commercial broadcast.

From there the process could continue, with another message being displayed to invite the viewer to switch to yet another channel and so forth. Otherwise any of the aforementioned schemes could then be used to verify the viewer's continuing interest while the commercial material is being shown, or the procedure could just stop after one channel change.

The ECM is decrypted and analyzed in the security module to determine an expected response to the display of the second component of the first message. The viewer's actual response is compared with the expected response and the result of the comparison is recorded. According to a predetermined protocol, a reward of some nature is allotted for a viewer's response which is deemed to be correct.

Instead of having an ECM to convey the expected response (second signal), it would also be possible to use any other form of encrypted data generally used in the Pat-TV industry, such as certain data within the service information tables (SI tables), for example the Event Information Tables (EIT) or Signal Description Data (SDT).

The reward procedure is illustrated In FIG.2. A first broadcast signal (CT) is received by a receiver/decoder (RX). This first signal comprises a first component (CP1) including a programme, divided into portions of interest (INT) and portions of commercial content (CC), and a second component (CP2) comprising graphical information (GI) to be displayed along with the commercial content. The programme is displayed on a display unit (MON). During the time that the commercial content is being aired the graphical information from the second component is displayed, requiring the viewer to respond (CODE) using the viewer input means (RC). The viewer's response is sent to the security module (SM). A second signal (ECM) containing verification data is received by the receiver/decoder and passed to the security module (SM). The security module decrypts the ECM and extracts the expected response (CODE). The expected response is compared with the viewer's response and the result is stored in a memory (MEM).

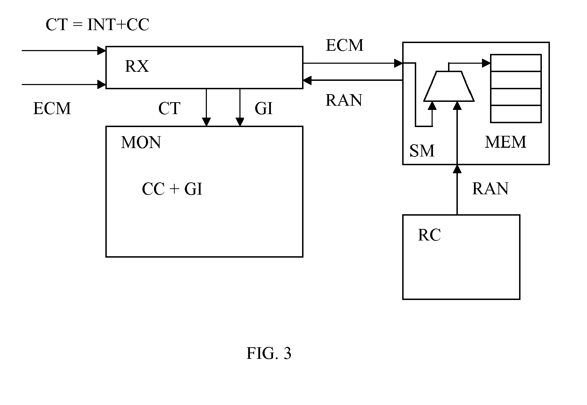

In another embodiment of the current invention (FIG.3), instead of broadcasting a second component containing the graphical information to be used in soliciting the viewer's intervention, said graphical information is generated at the viewer's site with the help of the security module. In this case, the reception of the second signal (ECM) triggers the security module to generate some random or semi-random information (RAN), which is firstly transferred to the receiver/decoder and used to derive the graphical information (GI) for display, thus soliciting the viewer's intervention. In this way, the verification of the viewer's intervention lies within the scope of the security module. A variation of this embodiment could be that the ECM, as well as triggering the security module to generate some random or semi-random information, could contain information relative to the position on-screen of the resulting graphical information, thus requiring the viewer to include positional information as part of his intervention.

In yet another embodiment of the current invention, instead of just triggering the security module to generate some random or semi-random information, the ECM could contain a seed which would be used by the security unit to generate the information to be used in the display requiring the viewer's intervention. In this case the viewer's expected response becomes predictable by the programme broadcaster and therefore the ECM could also contain information usable in the verification of the viewer's response.

In a further embodiment a mix of the above methods can be used, wherein the second component of the first signal contains only part of the code to be displayed, while the remaining part of the code is generated by the security module upon reception of the ECM. The viewer would be required to include both parts of the displayed information in his response.

In yet a further embodiment the required response may be a function of the characters displayed, for example the viewer may be required to perform an arithmetic operation on the characters displayed and to enter the result of said operation.

In another embodiment, the ECM could contain information to be used in the management of the rewards allotted to the viewer. For example, the ECM could contain information defining how much credit the viewer will be allocated for a correct response. Another possibility is for a credit limit to be included, whereby the security module will credit the viewer only if the viewer has not exceeded the specified credit limit. Such a credit limit may also be time-bound in that it would apply to a certain period of time. For example a viewer could be restricted to accruing a maximum of x units of credit in one session of y minutes. Alternatively, the ECM could contain a time window within which the viewer is allowed to submit his response. For example, an ECM received at time t could contain either a time t+delay to be used to compare against the time the viewer's response is given, thus qualifying or disqualifying its validity with respect to the time the viewer replies. Instead of an absolute time, the ECM could contain a value for "delay" which could be loaded into a timer. In this case the viewer's response would be accepted as long as the timer has not counted down to zero.

According to another embodiment and in case that the receiver/decoder is permanently connected with an authorization center, the response given by the viewer is transmitted to the authorization center with the identification of the security module. The authorization center can verify the conformity of this response and send a message to the security module to update the credit according to the reward policy.

## Claims

1. A method for compensating a viewer of a broadcast programme, using a system comprising at least a receiver/decoder, a security module, a display unit and a viewer input means, for his presence during at least part of said broadcast programme, wherein the validity of said presence is verified in the security module, said method comprising the following steps:
- receiving a first signal comprising a first component comprising at least the broadcast programme and a second component comprising video data to be used in soliciting a response on the part of the viewer;
- displaying the first component and the second component of the first signal on the display unit, thereby soliciting a response from the viewer via the viewer input means;
- receiving a second signal comprising verification data to be used in checking the validity of the viewer's response;
- transferring the second signal to the security module;
- using the security module to determine an expected response based on the received second signal;
- collecting the viewer's response;
- transferring the viewer's response to the security module;
- comparing the viewer's response with the expected response;
- storing a value indicating the result of the comparison between the viewer's response and the expected response.

2. The method of claim 1 wherein the second component of the first signal comprises an alphanumeric string to be graphically illustrated.

3. The method of claim 1 wherein the second component of the first signal comprises geometrical information describing a shape to be graphically illustrated.

4. The method of either of claims 1 through 3 wherein the second signal comprises positional information.

5. The method of claim 1 wherein the response required from the viewer is a function using elements of the displayed on the display unit as arguments of said function.

6. The method of claim 1 wherein the second signal triggers the generation of a random value in the security module, said random value to be used in lieu of the second component of the first signal.

7. The method of claim 1 wherein the second component of the first signal comprises one part of the video data to be used in soliciting the viewer's intervention while the remaining part of said video data is generated in the security module upon reception of the second signal.

8. The method of claim 1, wherein the second signal is divided into a first part and a second part, this method comprising the steps of :
- receiving on a first channel the first part of the second signal,
- transferring the first part of the second signal to the security module,
- inviting the viewer, through the second component of the first signal, to switch to a second channel, the viewer's response being the switching to said second channel,
- receiving on the second channel the second part of the second signal,
- transferring the second part of the second signal to the security module, the expected response being the reception by the security module of the first part and the second part of the second signal.
